# EUROPÄISCHE PATENTSCHRIFT

(11) **EP 3 094 531 B1**
(45) Veröffentlichungstag und Bekanntmachung des Hinweises auf die Patenterteilung: **17.04.2019**
(21) Anmeldenummer: 14806255.7
(22) Anmeldetag: 02.12.2014
(51) Int. Cl.: B60W 30/10, B60W 30/095

(54) **VERFAHREN ZUM BETREIBEN EINES FAHRZEUGS**
METHOD FOR OPERATING A VEHICLE
PROCÉDÉ POUR FAIRE FONCTIONNER UN VÉHICULE

(30) Priorität: 16.01.2014 DE 102014200687
(43) Veröffentlichungstag der Anmeldung: 23.11.2016
(73) Patentinhaber: Robert Bosch GmbH, 70442 Stuttgart (DE)
(72) Erfinder: GRINENVAL, Charlotte, 71706 Markgroeningen (DE)
(86) Internationale Anmeldenummer: PCT/EP2014/076265
(87) Internationale Veröffentlichungsnummer: WO 2015/106875

(56) Entgegenhaltungen:
- EP-A2- 2 631 147
- DE-A1-102011 121 487
- DE-A1-102012 203 187

## Beschreibung

Die Erfindung betrifft ein Verfahren zum Betreiben eines Fahrzeugs. Die Erfindung betrifft des Weiteren ein Computerprogrammprodukt sowie ein Fahrerassistenzsystem.

### Stand der Technik

Im Stand der Technik sind verschiedene Fahrerassistenzsysteme bekannt, mit denen eine Unterstützung der Fahrfunktion des Fahrzeugs und weiterer Funktionen des Fahrzeugs durchgeführt werden, wie zum Beispiel eine automatische Abstandsregelung, eine Auffahrwarnung, ein Spurhalteassistent, eine Nachtsichtkamera mit Personenerkennung, ein Parkassistent zum automatischen Ein-parken des Fahrzeugs und ein Spurwechselassistent zur Erkennung eines Fahr-zeugs in einem toten Winkel. Verschiedene Fahrerassistenzsysteme sind in dem Artikel "Zukunft der Fahrerassistenz mit neuen E/E-Architekturen", ATZ Elektronik, 04/2011, Seiten 8 bis 15 beschrieben.

Die DE 10 2012 203 187 A1 offenbart ein Verfahren zur Prädiktion und Adaption von Bewegungstrajektorien eines Kraftfahrzeugs zur Unterstützung des Fahrers in seiner Fahraufgabe und/oder zur Verhinderung einer Kollision oder Minderung der Unfallfolgen.

Die DE 10 2011 121 487 A1 offenbart ein Verfahren zum Betreiben zumindest eines Fahrerassistenzsystems eins Kraftwagens, bei welchem mittels wenigstens einer in dem Kraftwagen vorgesehenen Sensoreinrichtung zumindest ein Abschnitt eines sich in Fahrtrichtung vor dem Kraftwagen erstreckenden Streckenverlaufs erfasst wird.

### Offenbarung der Erfindung

Die der Erfindung zugrunde liegende Aufgabe kann darin gesehen werden, ein verbessertes Verfahren zum Betreiben eines Fahrzeugs anzugeben.

Die der Erfindung zugrunde liegende Aufgabe kann des Weiteren darin gesehen werden, ein entsprechendes Computerprogrammprodukt bereitzustellen.

Die der Erfindung zugrunde liegende Aufgabe kann auch darin gesehen werden, ein entsprechendes Fahrerassistenzsystem anzugeben.

Diese Aufgaben werden mittels des jeweiligen Gegenstands der unabhängigen Ansprüche gelöst. Vorteilhafte Ausgestaltungen sind Gegenstand von jeweils abhängigen Unteransprüchen.

Gemäß der Erfindung wird ein Verfahren zum Betreiben eines Fahrzeugs bereitgestellt,
- wobei zu einem ersten Zeitpunkt eine erste Solltrajektorie ermittelt wird, basierend auf welcher eine Isttrajektorie des Fahrzeugs geregelt wird, dadurch gekennzeichnet, dass
- zu einem zweiten Zeitpunkt, der zeitlich nach dem ersten Zeitpunkt liegt, geprüft wird, ob basierend auf der ersten Solltrajektorie die Isttrajektorie des Fahrzeugs weiter geregelt werden kann oder nicht,
- wobei, wenn ja, die Isttrajektorie des Fahrzeugs weiter basierend auf der ersten Solltrajektorie geregelt wird,
- wobei, wenn nein, eine zweite Solltrajektorie ermittelt wird, basierend auf welcher die Isttrajektorie des Fahrzeugs geregelt wird.

Die Erfindung umfasst also insbesondere den Gedanken, zu prüfen, ob die ursprünglich berechnete, also insbesondere in einem vorangegangen Zyklus, erste Solltrajektorie weiter, also für die aktuellen Zyklus, für die Regelung der Isttrajektorie des Fahrzeugs verwendet werden kann oder nicht. Wenn dies der Fall ist, so wird die Isttrajektorie des Fahrzeugs weiter basierend auf der ersten Solltrajektorie geregelt. Wenn nicht, wird eine zweite Solltrajektorie ermittelt, basierend auf welcher die Isttrajektorie des Fahrzeugs geregelt wird.

Im Stand der Technik wurde zum zweiten Zeitpunkt stets eine zweite Solltrajektorie berechnet. Die erste Solltrajektorie wurde verworfen. Da erfindungsgemäß abhängig von der Prüfung vorgesehen ist, die erste Solltrajektorie weiterhin als Basis für eine Regelung der Isttrajektorie des Fahrzeugs zu verwenden, können in vorteilhafterweise eine Rechenzeit und ein Rechenaufwand eingespart werden. Dies ist insbesondere von Vorteil bei Echtzeitanwendungen.

Erfindungsgemäß ist ferner vorgesehen, dass eine Restsolltrajektorie ermittelt wird, die der ersten Solltrajektorie abzüglich eines zum zweiten Zeitpunkt bereits für die Regelung der Isttrajektorie verwendeten Abschnitts der ersten Solltrajektorie entspricht, wobei zum zweiten Zeitpunkt ein Fahrkorridor ermittelt wird, wobei geprüft wird, ob sich die Restsolltrajektorie komplett innerhalb des Fahrkorridors befindet, wobei, wenn ja, die Isttrajektorie des Fahrzeugs basierend auf der Restsolltrajektorie geregelt wird, wobei, wenn nein, die Isttrajektorie des Fahrzeugs basierend auf der zweiten Solltrajektorie geregelt wird.

Das heißt also insbesondere, dass nur noch die tatsächlich zu fahrende Strecke (die Restsolltrajektorie) berücksichtigt wird. Die bereits abgefahrene Strecke (der Abschnitt, der bereits für die Regelung verwendet wurde) wird nicht mehr berücksichtigt. Ein Fahrkorridor definiert in der Regel eine befahrbare Fläche, innerhalb welcher das Fahrzeug geführt wird. Außerhalb des Fahrkorridors befinden sich üblicherweise stationäre Hindernisse oder es ist mit einer Einbuße an Fahrkomfort zu rechnen, wenn das Fahrzeug außerhalb des Fahrkorridors fahren sollte. Solange sich aber die Restsolltrajektorie innerhalb des Fahrkorridors befindet, können die vorstehenden Nachteile vermieden werden. Insbesondere kann eine Kollision mit Hindernissen vermieden werden. Insbesondere kann in vorteilhafter Weise eine Einbuße an Fahrkomfort verhindert werden.

Des Weiteren wird ein Rauschen im Fahrkorridor, beispielsweise aufgrund einer Sensorikschwäche, weniger Auswirkungen auf das Fahrverhalten, also auf die Regelung, bewirken oder generieren im Vergleich zum bekannten Stand der Technik, in welchem stets zum zweiten Zeitpunkt eine zweite Solltrajektorie berechnet wurde. Denn nach einer Ausführungsform wird ein Fahrkorridor basierend auf mindestens einem Parameter einer Umgebung des Fahrzeugs ermittelt, der mittels wenigstens eines Sensors (zum Beispiel: Videosensor, Lasersensor, Ultraschallsensor, Radarsensor, Lidarsensor) erfasst wird. Ein solcher Sensor kann ein Rauschen aufweisen, was somit mittelbar auch zu einem Rauschen im Fahrkorridor führen kann. Aufgrund der Bedingung, dass die Restsolltrajektorie sich innerhalb des Fahrkorridors befinden muss, damit die erste Solltrajektorie weiter für die Regelung verwendet werden kann, wird ein Einfluss des Rauschens vermindert oder sogar vermieden.

Nach einer Ausführungsform kann vorgesehen sein, dass zum ersten Zeitpunkt ein erster Fahrkorridor ermittelt wird. Der erste Fahrkorridor kann nach einer Ausführungsform analog zum Fahrkorridor ermittelt werden. Die erste Solltrajektorie wird dann so ermittelt, dass diese komplett innerhalb des ersten Fahrkorridors angeordnet ist. Das heißt also insbesondere, dass zum ersten Zeitpunkt ein erster Fahrkorridor ermittelt wird, wobei eine erste Solltrajektorie innerhalb des ersten Fahrkorridors ermittelt wird. Zur besseren Unterscheidung kann in der Ausführungsform umfassend einen ersten Fahrkorridor der Fahrkorridor, der zum zweiten Zeitpunkt ermittelt wird, als der zweite Fahrkorridor bezeichnet werden.

Gemäß der Erfindung ist ferner vorgesehen, dass die Restsolltrajektorie mit einer Position des Fahrzeugs zum oder nach dem zweiten Zeitpunkt verknüpft wird. Insbesondere wird die Restsolltrajektorie mit eine Fahrtrichtung des Fahrzeugs zum oder nach dem zweiten Zeitpunkt verknüpft.

Hier wird in vorteilhafter Weise der Umstand berücksichtigt, dass das Fahrzeug gegebenenfalls eine Position zum zweiten Zeitpunkt aufweist, die nicht auf der ersten Solltrajektorie liegt. Dies beispielsweise aufgrund von äußeren Einflüssen, zum Beispiel Seitenwinden und/oder einem Rauschen in einer Positionsbestimmung. Im Idealfall würde das Fahrzeug zum zweiten Zeitpunkt auf der ersten Solltrajektorie angeordnet sein oder liegen. Das Rauschen bei der Positionsbestimmung kann beispielsweise aufgrund eines Sensorrauschens bewirkt sein.

Das Verknüpfen bewirkt also insbesondere in vorteilhafter Weise, dass die Restsolltrajektorie nahtlos oder kontinuierlich, also stetig, an die momentane, also zum Verknüpfungszeitpunkt vorliegende, Isttrajektorie des Fahrzeugs übergeht. Dies vermeidet in vorteilhafter Weise abrupte Sprünge bei einer Regelung der Fahrzeugbewegung. Denn falls das Fahrzeug sich abseits von der Solltrajektorie befindet, wird es in der Regel ein abruptes Fahrzeugmanöver durchführen, um zu der ersten Solltrajektorie zu gelangen.

In einer Ausführungsform kann vorgesehen sein, dass der Fahrkorridor eine vorbestimmte Länge aufweist, wobei die erste Solltrajektorie mittels einer analytischen Funktion beschrieben wird, so dass die erste Restsolltrajektorie basierend auf der analytischen Funktion bis zum Längsende des Fahrkorridors verlängert wird, wobei geprüft wird, ob sich die verlängerte erste Restsolltrajektorie komplett innerhalb des Fahrkorridors befindet oder nicht, wobei, wenn ja, die Isttrajektorie des Fahrzeugs basierend auf der verlängerten Restsolltrajektorie geregelt wird, wobei, wenn nein, die Isttrajektorie des Fahrzeugs basierend auf der zweiten Solltrajektorie geregelt wird.

Es kann vorkommen, dass die ursprünglich berechnete erste Solltrajektorie nicht bis zum Längsende, das auch als ein Horizont bezeichnet werden kann, reicht, da sich aufgrund einer Fahrzeugbewegung der Fahrkorridor, der ja üblicherweise an die momentane Position des Fahrzeugs geknüpft ist, entsprechend verschoben hat. Denn zum Zeitpunkt des Berechnens der ersten Solltrajektorie war der Fahrkorridor noch nicht vorhanden, so dass die erste Solltrajektorie noch gar nicht bis zum Horizont des Fahrkorridors, der ja erst später, nämlich zum zweiten Zeitpunkt berechnet wird, ermittelt werden konnte. Da aber die erste Solltrajektorie mittels einer analytischen Funktion beschrieben werden kann, kann die Restsolltrajektorie bis zum Längsende oder bis zum Horizont des Fahrkorridors einfach verlängert werden. Basierend auf der verlängerten Restsolltrajektorie kann dann in vorteilhafter Weise die Isttrajektorie des Fahrzeugs geregelt werden, wenn sich die verlängerte Restsolltrajektorie innerhalb des Fahrkorridors befindet. Anderenfalls wird die zweite Solltrajektorie ermittelt, basierend auf welcher die Isttrajektorie des Fahrzeugs geregelt wird.

Unter einem Horizont im Sinne der vorliegenden Erfindung kann beispielsweise eine Sensorreichweite (also wie weit kann der Sensor sensorisch ein Umfeld erfassen) oder Sichtweite eines Sensors (oder der Sensorik) verstanden werden. Unter einem Horizont kann insbesondere eine von einer Situationsanalyse relevante Länge bezogen auf eine Längsrichtung des Fahrzeugs und gemessen ab dem Fahrzeug zum Zeitpunkt des Ermittelns des entsprechenden Fahrkorridors verstanden werden. Die relevante Länge kann somit insbesondere kleiner als eine Sensorreichweite sein. Dies insbesondere dann, wenn eine Situationsanalyse (also eine Analyse einer momentan vorliegenden Situation) ergibt, dass nur eine relevante Länge, die kleiner ist als die Sensorreichweite, als Basis für die Berechnung der verlängerten Restsolltrajektorie verwendet werden soll. Die Restsolltrajektorie wird also soweit verlängert, bis sie so lang wie die relevante Länge ist.

In einer Ausführungsform kann vorgesehen sein, dass die Regelung der Isttrajektorie eine Längsregelung einer Fahrzeugbewegung und/oder eine Querregelung der Fahrzeugbewegung umfasst.

Gemäß einer weiteren Ausführungsform kann vorgesehen sein, dass im Fall eines vor dem Fahrzeug vorausfahrenden weiteren Fahrzeugs und im Fall einer Längsregelung der Fahrzeugbewegung, um einen Istabstand auf einen Sollabstand zwischen dem Fahrzeug und dem weiteren Fahrzeug zu regeln, die erste Solltrajektorie für die weitere Regelung der Isttrajektorie verwendet werden kann, wenn eine Abweichung des Istabstands vom Sollabstand kleiner, insbesondere kleiner oder gleich, ist als ein vorbestimmter Abweichungsschwellwert. Das heißt also insbesondere, dass solange die Abweichung kleiner, vorzugsweise kleiner oder gleich, dem Abweichungsschwellwert ist, wird die Isttrajektorie weiter basierend auf der ersten Solltrajektorie berechnet.

Ein Fahrkorridor im Sinne der vorliegenden Erfindung bildet insbesondere eine Fahraufgabe. Der Horizont des Fahrkorridors für eine Querführung ist insbesondere die für die Fahraufgabe relevante Länge in x-Richtung (in Fahrtrichtung). Für eine Längsführung ist der Horizont des Fahrkorridors insbesondere die Zeit, bis wann ein oder mehrere Positionsziele der Fahraufgabe erreicht werden sollen. Ein Fahrkorridor beinhaltet oder umfasst vorzugsweise Begrenzungen für die Querführung und Passierpunkte, die bestimmte Flächen verbieten, und eine Prädiktion der Bewegung der Passierpunkte über die Zeit. Der Fahrkorridor ist beispielsweise eine Freiraumbeschreibung mit einer Definition von Zielen für eine Zielposition und eine Zielausrichtung in diesem Raum (der Freiraum).

Auch hier können in vorteilhafter Weise im Fall einer Längsregelung Rechenzeit und Rechenaufwand eingespart werden. Dadurch führt ein Rauschen bei einer Abstandsmessung, beispielsweise aufgrund einer Sensorikschwäche der Abstandsmesssensorik, nicht zu einer unkomfortablen Längsregelung.

Gemäß der Erfindung wird ferner ein Computerprogrammprodukt mit Programmcodemitteln zur Durchführung des Verfahrens zum Betreiben eines Fahrzeugs bereitgestellt, wenn das Computerprogrammprodukt auf einer Verarbeitungseinrichtung abläuft oder auf einem computerlesbaren Datenträger gespeichert ist.

Des weiteren wird erfindungsgemäß ein Fahrerassistenzsystem für ein Fahrzeug bereitgestellt, wobei das Fahrerassistenzsystem eine Verarbeitungseinrichtung umfasst, die dazu eingerichtet ist, das Verfahren zum Betreiben eines Fahrzeugs durchzuführen.

Gemäß einer Ausführungsform kann vorgesehen sein, dass das Fahrerassistenzsystem als ein Stauassistenzsystem ausgebildet ist.

Ein Stauassistenzsystem im Sinne der vorliegenden Erfindung unterstützt einen Fahrer bei einer Fahrzeugführung, wenn ein Stau oder ein stockender Verkehr vorliegt. Insbesondere kann das Stauassistenzsystem das Fahrzeug hochautomatisiert, also ohne einen Eingriff des Fahrers, während eines Staus oder eines stockenden Verkehrs führen.

Ein Führen im Sinne der vorliegenden Erfindung umfasst insbesondere eine Längsführung und/oder eine Querführung.

Merkmale und Funktionalitäten für das Fahrerassistenzsystem ergeben sich analog aus den Ausführungsformen des Verfahrens und umgekehrt.

Die Erfindung wird im Folgenden anhand von bevorzugten Ausführungsbeispielen näher erläutert. Hierbei zeigen
Fig. 1 ein Ablaufdiagramm eines Verfahrens zum Betreiben eines Fahrzeugs,
Fig. 2 ein Fahrerassistenzsystem für ein Fahrzeug,
Fig. 3 ein Fahrzeug in einem Fahrkorridor,
Fig. 4 ein Fahrzeug in einem Fahrkorridor, wobei die erste Solltrajektorie weiter zur Regelung der Isttrajektorie verwendet werden kann,
Fig. 5 ein Fahrzeug in einem Fahrkorridor, wobei für die weitere Regelung der Isttrajektorie eine zweite Solltrajektorie berechnet werden muss,
Fig. 6 ein Fahrzeug in einem Fahrkorridor zu zwei unterschiedlichen Zeitpunkten, wobei zum späteren Zeitpunkt das Fahrzeug nicht auf der ersten Solltrajektorie angeordnet ist,
Fig. 7 ein Ablaufdiagramm eines weiteren Verfahrens zum Betreiben eines Fahrzeugs und
Fig. 8 ein Fahrzeug und ein dem Fahrzeug vorausfahrendes Fahrzeug.

Im Folgenden können für gleiche Merkmale gleiche Bezugszeichen verwendet werden. Der Übersicht halber weisen nicht immer sämtliche gezeigte Merkmale stets ein Bezugszeichen auf.

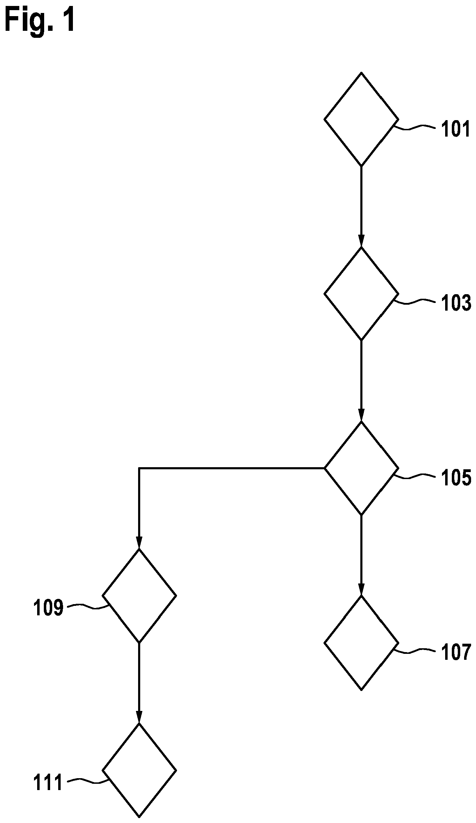

Fig. 1 zeigt ein Ablaufdiagramm eines Verfahrens zum Betreiben eines Fahrzeugs.

In einem Schritt 101 wird zu einem ersten Zeitpunkt eine erste Solltrajektorie ermittelt. Dies insbesondere für einen ersten Zyklus, also insbesondere einen ersten Regelungszyklus. Basierend auf der ersten Solltrajektorie wird in einem Schritt 103 eine Isttrajektorie des Fahrzeugs geregelt.

In einem Schritt 105 wird zu einem zweiten Zeitpunkt (insbesondere für einen zweiten Zyklus, also insbesondere für einen zweiten Regelungszyklus), der zeitlich nach dem ersten Zeitpunkt liegt, geprüft, ob basierend auf der ersten Solltrajektorie die Isttrajektorie des Fahrzeugs weiter geregelt werden kann oder nicht. Wenn im Schritt 105 festgestellt wurde, dass die erste Solltrajektorie weiter als Basis für die Regelung der Isttrajektorie des Fahrzeugs verwendet werden kann, so wird im Schritt 107 die Isttrajektorie des Fahrzeugs weiter basierend auf der ersten Solltrajektorie geregelt.

Wenn im Schritt 105 festgestellt wurde, dass basierend auf der ersten Solltrajektorie die Isttrajektorie des Fahrzeugs nicht weiter geregelt werden kann, so wird in einem Schritt 109 eine zweite Solltrajektorie ermittelt, basierend auf welcher in einem Schritt 111 die Isttrajektorie des Fahrzeugs geregelt wird.

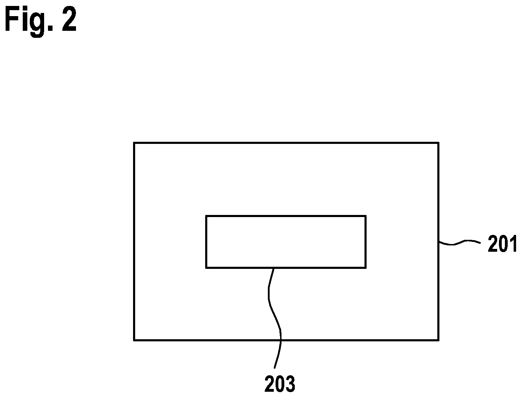

Fig. 2 zeigt ein Fahrerassistenzsystem 201 für ein Fahrzeug (nicht gezeigt).

Das Fahrerassistenzsystem 201 umfasst eine Verarbeitungseinrichtung 203, beispielsweise einen Computer. Die Verarbeitungseinrichtung 203 ist eingerichtet, das Verfahren zum Betreiben eines Fahrzeugs durchzuführen.

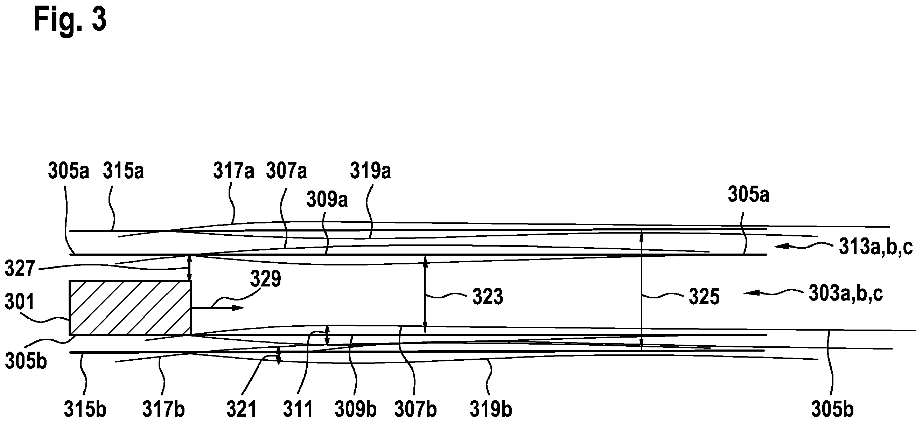

Fig. 3 zeigt ein Fahrzeug 301 in Fahrkorridoren 303a, b, c, wobei diese Fahrkorridore zu unterschiedlichen Zeitpunkten ermittelt wurden. Die Fahrkorridore 303a, b, c sind symbolisch jeweils durch Grenzen mit den Bezugszeichen 305a und 305b respektive Grenzen 307a,b und 309a,b begrenzt. Im Idealfall sollten die Grenzen 305a,b und 307a,b und 309a,b nahtlos, also stetig, ineinander übergehen. Aufgrund eines Sensorrauschens bei der Erfassung des Fahrkorridors rauscht in der Regel auch der Fahrkorridor mit seinen Grenzen. Dies ist symbolisch in Fig. 3 dargestellt, insofern die einzelnen Grenzen 305a,b (für den Fahrkorridor 303a) und 307a,b (für den Fahrkorridor 303b) und 309a,b (für den Fahrkorridor 303c) verschoben zueinander gezeichnet sind. Ein Doppelpfeil mit dem Bezugszeichen 311 kennzeichnet symbolisch das Rauschen. Die Länge des Doppelpfeils mit dem Bezugszeichen 311 entspricht insofern einer Rauschamplitude.

Des Weiteren sind in Fig. 3 weitere Fahrkorridor 313a,b,c eingezeichnet, die zu denjenigen Zeitpunkten gebildet wurden, zu denen auch die Fahrkorridore 303a,b,c gebildet wurden (gleicher erster Zeitpunkt für die Fahrkorridore 303a und 313a, gleicher zweiter Zeitpunkt für die Fahrkorridore 303b und 313b und gleicher dritter Zeitpunkt für die Fahrkorridore 303c und 313c). Auch die mehreren Fahrkorridore 313a,b,c sind analog zu den Fahrkorridor 303a,b,c jeweils durch Grenzen 315a,b und 317a,b und 319a,b begrenzt. Die weiteren Fahrkorridor 313a,b,c umfassen jeweils die Fahrkorridore 303a,b,c. Das heißt also insbesondere, dass die Fahrkorridor 303a,b,c innerhalb der weiteren Fahrkorridore 313a,b,c angeordnet sind. So können beispielsweise die weiteren Fahrkorridore 313a,b,c jeweils einen Fahrkorridor definieren, dessen Grenzen nicht überfahren werden dürfen, da es ansonsten zu einem Unfall kommen kann. Dies insbesondere dann, wenn sich stationäre Hindernisse außerhalb der weiteren Fahrkorridor 313a,b,c befinden.

Die Fahrkorridore 303a,b,c können jeweils einen Fahrkorridor definieren, dessen Grenzen im Notfall überschritten werden dürfen. In der Regel sollten aber die Fahrkorridore 303a,b,c nicht verlassen werden. Denn diese sind in der Regel so gewählt, dass ein Maximum an Fahrkomfort gewährleistet ist.

Auch die Grenzen 315a,b und 317a,b und 319a,b des weiteren Fahrkorridors 313 zu unterschiedlichen Zeitpunkten weisen ein Rauschen auf. Dies ist hier analog mit einem Doppelpfeil mit dem Bezugszeichen 321 gekennzeichnet.

Der Doppelpfeil mit dem Bezugszeichen 323 kennzeichnet eine Breite des Fahrkorridors 303b. Der Doppelpfeil mit dem Bezugszeichen 325 kennzeichnet eine Breite des weiteren Fahrkorridors 313a. Der Doppelpfeil mit dem Bezugszeichen 327 kennzeichnet symbolisch einen Freiheitsgrad des Fahrzeugs 301 in dem Fahrkorridor 303a. Hierbei entspricht dieser Freiheitsgrad einem maximalen seitlichen Abstand des Fahrzeugs 301 zu der Grenze 305a, ohne dass hierbei das Fahrzeug 301 den Fahrkorridor 303a verlässt. Der Freiheitsgrad 327 entspricht somit einem maximal möglichen Bewegungsspielraum des Fahrzeugs 301 in seitlicher oder in Querrichtung. Dies bezogen auf die Fahrtrichtung des Fahrzeugs, die hier symbolisch mit einem Pfeil mit dem Bezugszeichen 329 gekennzeichnet ist.

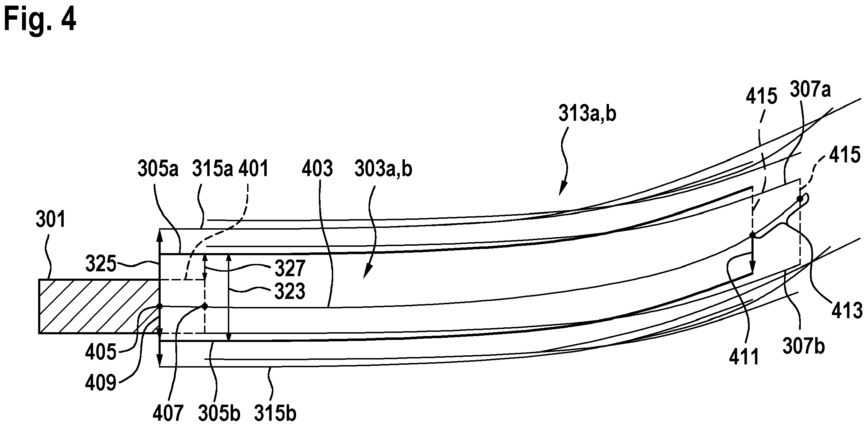

Fig. 4 zeigt das Fahrzeug 301 im Fahrkorridor 303a zu einem ersten Zeitpunkt an einer ersten Position 405 und zu einem zweiten Zeitpunkt im Fahrkorridor 303b an einer zweiten Position 407. Die Grenzen des Fahrkorridors 303a zum ersten Zeitpunkt sind die Grenzen 305a und 305b. Die Grenzen des Fahrkorridors 303b zum zweiten Zeitpunkt, also wenn sich das Fahrzeug an der Position 407 befindet, sind die Grenzen 307a und 307b. Das Fahrzeug 301 ist mit dem Bezugszeichen 401 gekennzeichnet, wenn es sich an der Position 407 zum zweiten Zeitpunkt befindet.

Eine erste Solltrajektorie, die zum ersten Zeitpunkt ermittelt wurde, ist mit dem Bezugszeichen 403 gekennzeichnet. Ein Abstand der Position 405, die auf der ersten Solltrajektorie 403 liegt, zur Grenze 305b ist mit einem einfachen Pfeil mit dem Bezugszeichen 409 gekennzeichnet. Ein entsprechender Abstand der Solltrajektorie 403 am Längsende des Fahrkorridors 303a zum ersten Zeitpunkt ist mit einem Pfeil mit dem Bezugszeichen 411 gekennzeichnet. Hierbei ist das Längsende des Fahrkorridors 303a zum ersten Zeitpunkt (und auch das Längsende des Fahrkorridors 303b zum zweiten Zeitpunkt) mittels einer gestrichelten Linie gezeichnet, die das Bezugszeichen 415 aufweist.

Das Bezugszeichen 413 kennzeichnet einen verlängerten Abschnitt der ersten Solltrajektorie 403 in Richtung des Längsendes 415 des Fahrkorridors 303b zum zweiten Zeitpunkt. Dieses Verlängern ist insbesondere möglich, da die erste Solltrajektorie 403 mittels einer analytischen Funktion beschrieben werden kann.

Wie die Fig. 4 zeigt, befindet sich die verlängerte erste Solltrajektorie 403 komplett innerhalb des Fahrkorridors 303 zum zweiten Zeitpunkt. Das heißt also insbesondere, dass zum zweiten Zeitpunkt keine Neuberechnung einer Solltrajektorie (also Berechnung einer zweiten Solltrajektorie) durchgeführt werden muss. Das heißt also insbesondere, dass die Isttrajektorie des Fahrzeugs basierend auf der verlängerten ersten Solltrajektorie 403 weiter geregelt werden kann.

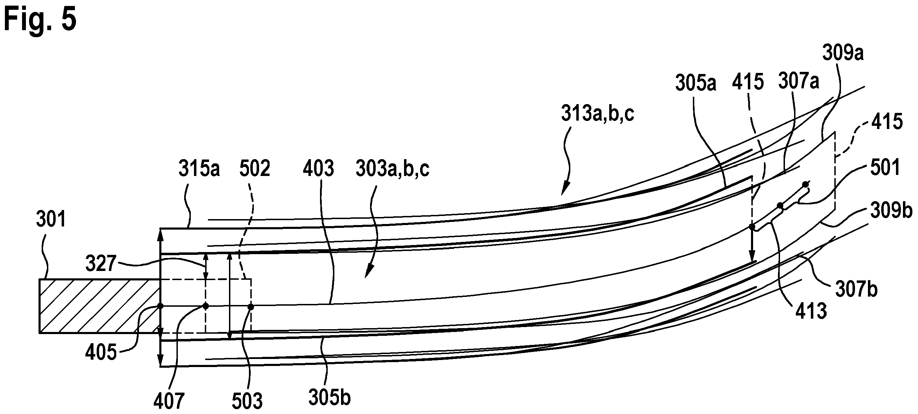

Fig. 5 zeigt nun ein Beispiel, in welchem eine Neuberechnung einer Solltrajektorie durchgeführt werden muss. Das Fahrzeug befindet sich nun zum dritten Zeitpunkt, der zeitlich nach dem zweiten Zeitpunkt liegt, an einer Position 503 im Fahrkorridor 303c mit den Grenzen 309a,b. an der Position 503 ist das Fahrzeug mit dem Bezugszeichen 502 gekennzeichnet. Die gemäß Figur 4 verlängerte Solltrajektorie wird auch hier verlängert zum Längsende des dritten Fahrkorridors 303c. Der verlängernde Abschnitt ist mit dem Bezugszeichen 501 gekennzeichnet. Dieser liegt hier teilweise außerhalb des Fahrkorridors 303c, der zum dritten Zeitpunkt ermittelt wurde. Das heißt, dass für den dritten Fahrkorridor 303c die bisherige Solltrajektorie nicht weiter zur Regelung der Isttrajektorie verwendet werden kann. Es muss eine neue Solltrajektorie für den dritten Fahrkorridor 303c berechnet werden, also eine zweite Solltrajektorie.

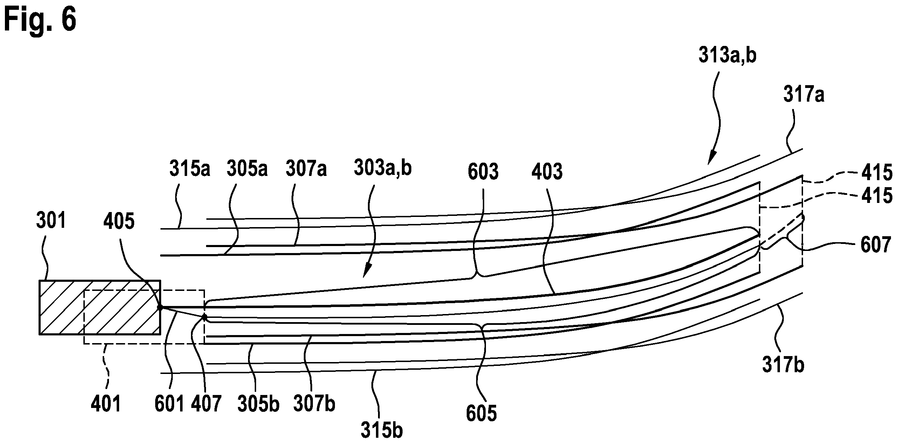

Fig. 6 zeigt das Fahrzeug 301 in dem Fahrkorridor 303a zu einem ersten Zeitpunkt zur Position 405 und zu einem zweiten Zeitpunkt zur Position 407 im Fahrkorridor 303b. Hierbei befindet sich die Position 407 im Vergleich zu den Figuren 4 und 5 seitlich beabstandet zu der ersten Solltrajektorie 403. Die bereits gefahrene Trajektorie des Fahrzeugs 301 ist mit dem Bezugszeichen 601 gekennzeichnet. Es verbleibt somit eine Restsolltrajektorie, die mit dem Bezugszeichen 603 gekennzeichnet ist. Diese Restsolltrajektorie 603 wird mit der Position des Fahrzeugs zum zweiten Zeitpunkt, also mit der Position 407, verknüpft. Die verknüpfte Restsolltrajektorie ist mit dem Bezugszeichen 605 gekennzeichnet. Der verlängerte Abschnitt der verknüpften Restsolltrajektorie 605 zum Längsende 415 des Korridors 303b zum zweiten Zeitpunkt ist mit dem Bezugszeichen 607 gekennzeichnet. Auch hier liegt diese verknüpfte verlängerte Restsolltrajektorie innerhalb des Fahrkorridors zum zweiten Zeitpunkt, also zum zweiten Fahrkorridor. Für den zweiten Fahrkorridor 303b muss keine neue Solltrajektorie verwendet werden. Es wird die verknüpfte verlängerte Restsolltrajektorie für die Regelung der Isttrajektorie verwendet. Dies insbesondere bis zu einem dritten Zeitpunkt, zu welchem ein dritter Fahrkorridor ermittelt wird. Zum dritten Zeitpunkt wird dann geprüft, ob die verknüpfte verlängerte Restsolltrajektorie auch für die Regelung der Isttrajektorie innerhalb des dritten Fahrkorridors verwendet werden kann.

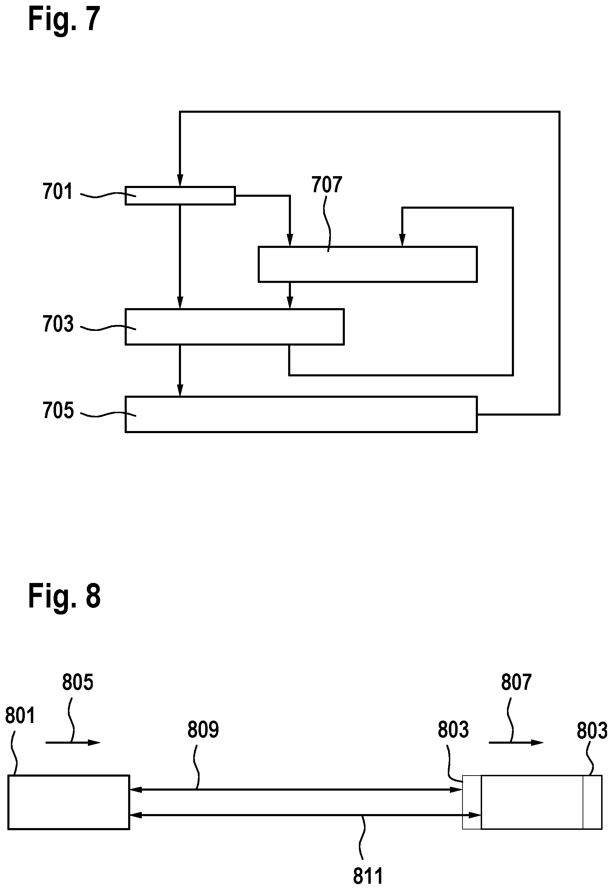

Fig. 7 zeigt ein Ablaufdiagramm eines weiteren Verfahrens zum Betreiben eines Fahrzeugs.

Gemäß einem Schritt 701 wird ein erster Fahrkorridor ermittelt. Basierend auf dem ermittelten Fahrkorridor wird eine Trajektorienplanung durchgeführt gemäß einem Schritt 703. Das heißt also insbesondere, dass im Schritt 703 eine erste Solltrajektorie ermittelt wird, die innerhalb des ersten Fahrkorridors angeordnet ist. Basierend auf der ersten Solltrajektorie wird eine Isttrajektorie gemäß einem Schritt 705 geregelt. Hierbei ist vorgesehen, dass zyklisch Fahrkorridore gemäß dem Schritt 701 ermittelt werden, wobei in einem Schritt 707 geprüft wird, ob die im vorherigen Zyklus ermittelte Solltrajektorie gemäß dem Schritt 703 für den aktuellen Zyklus verwendet werden kann. Wenn dies der Fall ist, so wird diese Solltrajektorie des vorherigen Zyklus als Basis für die Bewegungsregelung, also für die Regelung der Isttrajektorie auf die Solltrajektorie, verwendet. Anderenfalls wird eine neue Solltrajektorie berechnet.

Fig. 8 zeigt ein Fahrzeug 801, dem ein weiteres Fahrzeug 803 vorausfährt. Das Fahrzeug 801 fährt mit einer Geschwindigkeit, die symbolisch mit einem Pfeil mit dem Bezugszeichen 805 dargestellt ist. Analog kennzeichnet der Pfeil mit dem Bezugszeichen 807 symbolisch eine Geschwindigkeit des weiteren Fahrzeugs 803.

Wenn auf eine konstante Distanz zwischen dem Fahrzeug 801 und dem weiteren Fahrzeug 803 mittels Führen des Fahrzeugs 801 geregelt werden soll, so soll ein Rauschen in dem Signal bei der Distanzerfassung (also beispielsweise ein Rauschen in einem Sensorsignal) nicht zu einer unkomfortablen Längsregelung, also in Fahrtrichtung, führen. Hier zeigt das Bezugszeichen 809 auf einen Doppelpfeil zwischen dem Fahrzeug 801 und dem weiteren Fahrzeug 803, der einer Distanz zwischen den beiden Fahrzeugen 801 und 803 entspricht, gemessen zu einem ersten Zeitpunkt oder in einem ersten Zyklus. Entsprechend zeigt das Bezugszeichen 811 auf einen Doppelpfeil, der eine gemessene Distanz zwischen den beiden Fahrzeugen 801 und 803 kennzeichnet, gemessen zu einem zeitlich darauf folgenden zweiten Zeitpunkt oder Zyklus. Aufgrund eines Rauschens eines Sensors, der beispielsweise den Abstand misst, kann es somit zu einer unterschiedlichen Distanzmessung kommen. Dies obwohl die beiden Fahrzeuge 801 und 803 mit der gleichen Geschwindigkeit fahren. Damit dies aber nicht automatisch zu einer neuen Trajektorienplanung führt (also eine Berechnung einer zweiten Solltrajektorie), kann insbesondere vorgesehen sein, dass nur dann eine zweite Solltrajektorie zum zweiten Zeitpunkt berechnet wird, wenn eine Abweichung des Istabstands vom Sollabstand zwischen den beiden Fahrzeugen 801 und 803 kleiner, insbesondere kleiner oder gleich, ist als ein vorbestimmter Abweichungsschwellwert.

Das heißt also insbesondere, dass im Fall einer Längsführung analog zu dem Beispiel für die Querführung erst dann eine Solltrajektorie neu geplant wird, wenn ein definierter Freiheitsgrad, hier insbesondere der Abweichungsschwellwert, überschritten wird. Solange dies nicht der Fall ist, wird die Isttrajektorie des Fahrzeugs basierend auf der ursprünglich geplanten Solltrajektorie, also der ersten Solltrajektorie, weiter geregelt.

Die Erfindung umfasst also insbesondere den Gedanken, erst dann eine neue Solltrajektorie zu planen oder zu berechnen, wenn ein vorbestimmter oder vorgegebener Freiheitsgrad überschritten wurde. Dies bewirkt in vorteilhafter Weise eine Unempfindlichkeit einer Fahrzeugbewegung gegenüber einem Rauschen im Fahrkorridor und/oder einem Sensorrauschen. Das heißt also insbesondere, dass eine Möglichkeit gegeben ist, eine komfortable Bewegung selbst bei einer schlechten Sensorik zu bewirken.

Dies bewirkt ferner, dass auf eine schnelle Änderung dennoch reagiert werden kann. Dies im Gegensatz dazu, wenn die Eingangssignale von Sensoren, die beispielsweise einen Abstand zwischen dem Fahrzeug und einen weiteren Fahrzeug oder einem Hindernis oder einem beliebigen Objekt messen oder die eine Fahrzeugumgebung sensorisch erfassen, gefiltert würden, um das Rauschen zu eliminieren. Denn dies würde eine Dynamik einer Funktionsreaktivität beeinträchtigen. Die Erfindung hat aber im Gegensatz dazu keinen schlechten Einfluss auf eine gute Reaktion auf schnelle Änderungen. Es wird also insbesondere der Rest der alten Solltrajektorie (,die zum ersten Zeitpunkt berechnet oder ermittelt wurde,) an den aktuellen Ort und Richtung des Fahrzeugs geknüpft und geprüft, ob sich eine verlängerte verknüpfte Restsolltrajektorie weiterhin innerhalb des Fahrkorridors befindet, der zum zweiten Zeitpunkt berechnet wurde.

## Patentansprüche

1. Verfahren zum Betreiben eines Fahrzeugs (301),
- wobei zu einem ersten Zeitpunkt eine erste Solltrajektorie (403) ermittelt (101) wird, basierend auf welcher eine Isttrajektorie des Fahrzeugs (301) geregelt (103) wird,
- zu einem zweiten Zeitpunkt, der zeitlich nach dem ersten Zeitpunkt liegt, geprüft (105) wird, ob basierend auf der ersten Solltrajektorie (403) die Isttrajektorie des Fahrzeugs (301) weiter geregelt werden kann oder nicht,
**dadurch gekennzeichnet, dass**
- eine Restsolltrajektorie (603) ermittelt wird, die der ersten Solltrajektorie (403) abzüglich eines zum zweiten Zeitpunkt bereits für die Regelung der Isttrajektorie verwendeten Abschnitts (601) der ersten Solltrajektorie (403) entspricht, wobei zum zweiten Zeitpunkt ein Fahrkorridor (303b) ermittelt wird, wobei geprüft wird, ob sich die Restsolltrajektorie (603) komplett innerhalb des Fahrkorridors (303b) befindet, wobei, wenn ja, die Isttrajektorie des Fahrzeugs (301) basierend auf der Restsolltrajektorie (603) geregelt wird, wobei, wenn nein, die Isttrajektorie des Fahrzeugs (301) basierend auf der zweiten Solltrajektorie geregelt wird,
- wobei die Restsolltrajektorie (603) mit einer Position (405, 407, 503) des Fahrzeugs (301) zum oder nach dem zweiten Zeitpunkt verknüpft wird.

2. Verfahren nach Anspruch 1, wobei der Fahrkorridor (303b) eine vorbestimmte Länge aufweist, wobei die erste Solltrajektorie (403) mittels einer analytischen Funktion beschrieben wird, so dass die erste Restsolltrajektorie basierend auf der analytischen Funktion bis zum Längsende (415) des Fahrkorridors (303b) verlängert wird, wobei geprüft wird, ob sich die verlängerte erste Restsolltrajektorie komplett innerhalb des Fahrkorridors (303b) befindet oder nicht, wobei, wenn ja, die Isttrajektorie des Fahrzeugs (301) basierend auf der verlängerten Restsolltrajektorie geregelt wird, wobei, wenn nein, die Isttrajektorie des Fahrzeugs (301) basierend auf der zweiten Solltrajektorie geregelt wird.

3. Verfahren nach einem der vorherigen Ansprüche, wobei die Regelung der Isttrajektorie eine Längsregelung einer Fahrzeugbewegung und/oder eine Querregelung der Fahrzeugbewegung umfasst.

4. Verfahren nach Anspruch 3, wobei im Fall eines vor dem Fahrzeug (301) vorausfahrendes weiteren Fahrzeugs (803) und im Fall einer Längsregelung der Fahrzeugbewegung, um eine Istabstand auf einen Sollabstand zwischen dem Fahrzeug (301) und dem weiteren Fahrzeug (803) zu regeln, die erste Solltrajektorie (403) für die weitere Regelung der Isttrajektorie verwendet werden kann, wenn eine Abweichung des Istabstands vom Sollabstand kleiner ist als ein vorbestimmter Abweichungsschwellwert.

5. Computerprogrammprodukt mit Programmcodemitteln zur Durchführung des Verfahrens nach einem der vorherigen Ansprüche, wenn das Computerprogrammprodukt auf einer Verarbeitungseinrichtung (203) abläuft oder auf einem computerlesbaren Datenträger gespeichert ist.

6. Fahrerassistenzsystem (201) für ein Fahrzeug (301), umfassend eine Verarbeitungseinrichtung (203), die dazu eingerichtet ist, das Verfahren nach einem der Ansprüche 1 bis 4 durchzuführen.

7. Fahrerassistenzsystem (201) nach Anspruch 6, wobei das Fahrerassistenzsystem (201) als ein Stauassistenzsystem ausgebildet ist.

## Claims

1. Method for operating a vehicle (301),
- wherein, at a first time, a first reference trajectory (403) is determined (101), on the basis of which an actual trajectory of the vehicle (301) is adjusted (103),
- at a second time that temporally follows the first time, it is checked (105) whether or not, on the basis of the first reference trajectory (403), the actual trajectory of the vehicle (301) is able to be further adjusted,
**characterized in that**
- a remaining reference trajectory (603) is determined that corresponds to the first reference trajectory (403) minus a section (601), which has already been used for the adjustment of the actual trajectory at the second time, of the first reference trajectory (403), wherein, at the second time, a travel corridor (303b) is determined, it being checked whether the remaining reference trajectory (603) is situated completely within the travel corridor (303b), wherein, if so, the actual trajectory of the vehicle (301) is adjusted on the basis of the remaining reference trajectory (603), wherein, if not, the actual trajectory of the vehicle (301) is adjusted on the basis of the second reference trajectory,
- wherein the remaining reference trajectory (603) is linked to a position (405, 407, 503) of the vehicle (301) at or following the second time.

2. Method according to Claim 1, wherein the travel corridor (303b) has a predetermined length, wherein the first reference trajectory (403) is described by way of an analytical function, such that the first remaining reference trajectory is extended on the basis of the analytical function to the longitudinal end (415) of the travel corridor (303b), it being checked whether or not the extended first remaining reference trajectory is situated completely within the travel corridor (303b), wherein, if so, the actual trajectory of the vehicle (301) is adjusted on the basis of the extended remaining reference trajectory, wherein, if not, the actual trajectory of the vehicle (301) is adjusted on the basis of the second reference trajectory.

3. Method according to either of the preceding claims, wherein the adjustment of the actual trajectory comprises a longitudinal adjustment of a vehicle movement and/or a transverse adjustment of the vehicle movement.

4. Method according to Claim 3, wherein, in the case of a further vehicle (803) travelling in front of the vehicle (301) and in the case of a longitudinal adjustment of the vehicle movement, in order to adjust an actual distance to a reference distance between the vehicle (301) and the further vehicle (803), the first reference trajectory (403) may be used for the further adjustment of the actual trajectory if a deviation of the actual distance from the reference distance is smaller than a predetermined deviation threshold value.

5. Computer program product having program code means for executing the method according to one of the preceding claims when the computer program product runs on a processing device (203) or is recorded on a computer-readable data carrier.

6. Driver assistance system (201) for a vehicle (301), comprising a processing device (203) configured to execute the method according to one of Claims 1 to 4.

7. Driver assistance system (201) according to Claim 6, wherein the driver assistance system (201) is designed as a congestion assistance system.

## Revendications

1. Procédé de conduite d'un véhicule (301), dans lequel
- une première trajectoire de consigne (403) sur base de laquelle une trajectoire effective du véhicule (301) est régulée (103) et déterminée (101) à un premier instant,
- à un deuxième instant postérieur au premier instant, il est vérifié (105) si la trajectoire effective du véhicule (301) peut encore ou ne peut plus être régulée sur la base de la première trajectoire de consigne (403),
**caractérisé en ce que**
- une trajectoire résiduelle de consigne (603) qui correspond à la première trajectoire de consigne (403) à l'exception d'une partie (601) de la première trajectoire de consigne (403) qui a déjà été utilisée pour la régulation de la trajectoire effective est déterminée,
- **en ce qu'**au deuxième instant, un corridor de déplacement (303b) est déterminé et il est vérifié si la trajectoire résiduelle de consigne (603) est située entièrement à l'intérieur du corridor de déplacement (303b) ; si c'est le cas, la trajectoire effective du véhicule (301) est régulée sur la base de la trajectoire résiduelle de consigne (603) et si ce n'est pas le cas, la trajectoire effective du véhicule (301) est- régulée sur la base de la deuxième trajectoire de consigne et
- **en ce que** la trajectoire résiduelle de consigne (603) est associée à une position (405, 407, 503) du véhicule (301) au deuxième instant ou après celui-ci.

2. Procédé selon la revendication 1, dans lequel le corridor de déplacement (303b) présente une longueur prédéterminée, la première trajectoire de consigne (403) étant décrite au moyen d'une fonction analytique, de telle sorte que la première trajectoire résiduelle de consigne étant prolongée sur la base de la fonction analytique jusqu'à la fin (415) de la longueur du corridor de déplacement (303b), et il est vérifié si la première trajectoire résiduelle de consigne prolongée est entièrement située ou non à l'intérieur du corridor de déplacement (303b) ; si c'est le cas, la trajectoire effective du véhicule (301) est régulée sur la base de la trajectoire de consigner prolongée et si ce n'est pas le cas, la trajectoire effective du véhicule (301) est régulée sur la base de la deuxième trajectoire de consigne.

3. Procédé selon l'une des revendications précédentes, dans lequel la régulation de la trajectoire effective comporte une régulation du déplacement longitudinal du véhicule et/ou une régulation déplacement transversal du véhicule.

4. Procédé selon la revendication 3, dans lequel au cas où un autre véhicule (803) se déplace en avant du véhicule (301) et dans le cas d'une régulation du déplacement longitudinal du véhicule, pour réguler la distance de consigne entre le véhicule (301) et l'autre véhicule (803), la première trajectoire de consigne (403) peut être utilisée pour la poursuite de la régulation de la trajectoire effective si l'écart entre la distance effective et la distance de consigne est inférieur à une valeur de seuil prédéterminée de l'écart.

5. Produit de programme informatique présentant des moyens de code de programme permettant la mise en oeuvre d'un procédé selon l'une des revendications précédentes lorsque le produit de programme informatique est exécuté sur un dispositif de traitement (203) ou est conservé en mémoire sur un support de données lisible par ordinateur.

6. Système (201) d'assistance au conducteur pour un véhicule (301), comprenant un dispositif de traitement (203) conçu pour mettre en oeuvre un procédé selon l'une des revendications 1 à 4.

7. Système (201) d'assistance au conducteur selon la revendication 6, configuré comme système (201) d'assistance aux congestions de trafic.
